# EUROPÄISCHE PATENTANMELDUNG

(11) **EP 0 754 724 A2**
(43) Veröffentlichungstag der Anmeldung: **22.01.1997**
(21) Anmeldenummer: 96110101.1
(22) Anmeldetag: 22.06.1996
(51) Int. Cl.: C08K 5/527, C08L 101/00

(54) **Flammwidrige polymere Massen**

(30) Priorität: 17.07.1995 DE 19525951
(71) Anmelder: HOECHST AKTIENGESELLSCHAFT, 65926 Frankfurt am Main (DE)
(72) Erfinder: Staendeke, Horst, Dr., 53797 Lohmer (DE)

(57) **Zusammenfassung**

Die Erfindung betrifft flammwidrige polymere Massen, welche dadurch gekennzeichnet sind, daß sie einen cyclischen Diphosphorsäureester der allgemeinen Formel (I) 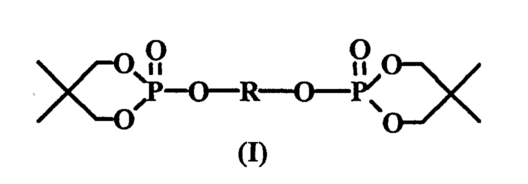 mit R = Methylethylen, 1,3-Cyclohexylen, 1,4-Cyclohexylen oder 1,3-Phenylen als Flammschutzmittel enthalten.

## Beschreibung

Die Erfindung betrifft flammwidrige polymere Massen, die als Flammschutzmittel einen cyclischen Diphosphorsäureester enthalten.

Es ist bekannt, polymere Massen mit halogenhaltigen organischen Verbindungen, insbesondere in Kombination mit Antimontrioxid, flammwidrig auszurüsten [J. Troitzsch, International Plastics Flammability Handbook, Carl-Hanser-Verlag München (1990), S. 53-60].

Gleichfalls bekannt ist, Kunststoff-Formmassen mit halogenfreien Intumeszenz-Flammschutzmitteln auf Basis Ammoniumpolyphosphat, wie sie beispielsweise in US-A-4198 493, US-A-4461862, EP-A-0258685 und EP-A-0584567 beschrieben sind, flammwidrig auszurüsten.

Überraschenderweise wurde nun gefunden, daß polymere Massen, die einen cyclischen Diphosphorsäureester enthalten, einen ausgezeichneten Flammschutzeffekt aufweisen.

So konnte gezeigt werden, daß beim Polyester-Polyurethan-Weichschaum für eine Einstufung in die Klasse UL 94-HF1 bei Verwendung von Ammoniumpolyphosphat, dem am besten geeigneten halogenfreien Flammschutzmittel für diesen PUR-Schaumtyp, die 1,5-fache Menge im Vergleich zu einem erfindungsgemäßen cyclischen Diphosphorsäureester eingesetzt werden muß.

Dies war überraschend und nicht vorhersehbar, weil das Ammoniumpolyphosphat nicht nur einen mehr als doppelt so hohen Phosphorgehalt (31,5 % gegenüber 15,2 %) aufweist, sondern auch noch über den Phsophor/Stickstoff-Synergismus bei einem Stickstoffgehalt von 14,5 % einen zusätzlichen Flammschutzbeitrag leisten kann.

Gegenstand der Erfindung sind daher flammwidrige polymere Massen, die als Flammschutzmittel einen cyclischen Diphosphorsäureester der allgemeinen Formel 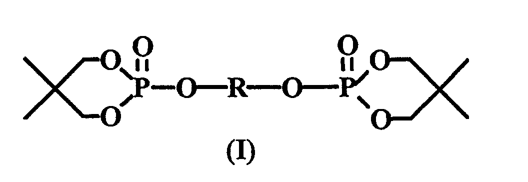 mit R = Methylethylen, 1,3-Cyclohexylen 1,4-Cyclohexylen oder 1,3-Phenylen enthalten.

Enthalten die flammwidrigen polymeren Massen den cyclischen Diphosphorsäureester in Kombination mit anderen Flammschutzmitteln, so sollten die anderen Flammschutzmittel bevorzugt halogenfrei sein.

Die flammwidrige polymere Masse gemäß der Erfindung enthält bevorzugt 98 bis 60 Gew.-% an Polymer oder einer Polymermischung und 2 bis 40 Gew.-% des cyclischen Diphosphorsäureesters.

Bevorzugt handelt es sich bei den Polymeren um Polyurethan-Systeme.

Das Polyurethan-System enthält bevorzugt 2 bis 40 Gew.-% des cyclischen Diphosphorsäureesters.

Bei den Polymeren kann es sich um die nachfolgend aufgeführte Substanzen handeln:
1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen, wie beispielsweise von Cyclopenten oder Norbornen.
2. Mischungen der unter 1. genannten Polymeren, beispielsweise Mischungen von Polypropylen mit Polyethylen oder mit Polyisobutylen.
3. Copolymere von Mono- und Diolefinen untereinander oder mit anderen Vinylmonomeren, wie beispielsweise Ethylen-Propylen-Copolymere, Propylen-Buten-1-Copolymere, Propylen-Isobutylen-Copolymere, Ethylen-Buten-1-Copolymere, Propylen-Butadien- Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.
4. Polystyrol, Poly(p-methylstyrol).
5. Copolymere von Styrol oder α-Methylstyrol mit Dienen oder Acrylderivaten, wie beispielsweise Styrol-Butadien, Styrol-Maleinsäureanhydrid, Styrol-Acrylnitril, Styrol-Ethylmethacrylat, Styrol-Butadien-Ethylacrylat, Styrol-Acrylnitril-Methacrylat; Mischungen von hoher Schlagzähigkeit aus Styrol-Copolymeren und einem anderen Polymer, wie
   beispielsweise einem Polyacrylat, einem Dien-Polymeren oder einem Ethylen-Propylen-Dien-Terpolymeren; sowie Block-Copolymere des Styrols, wie beispielsweise Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol, wie beispielsweise Styrol auf Polybutadien, Styrol und Acrylnitril auf Polybutadien, Styrol und Maleinsäureanhydrid auf Polybutadien, Styrol und Alkylacrylate oder Alkylmethacrylate auf Polybutadien, Styrol und Acrylntiril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5. genannten Copolymeren, die beispielsweise als sogenannte ABS-, MBS-, ASA- oder AES-Polymere bekannt sind.
7. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyvinylphthalat, Polyallylmelamin.
8. Polyphenylenoxyde und -sulfide und deren Mischungen mit Styrolpolymeren.
9. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte (Polyisocyanat-Polyol-Prepolymere).
10. Vernetzte Polymere, die sich von Aldehyden einerseits und Phenolen, Harnstoff oder Melamin andererseits ableiten, die Phenol-Formaldehyd-, Harnstoff-Formaldehyd- und Melamin-Formaldehydharze.
11. Mischungen der oben erwähnten Polymere bzw. Mischungen von oben nicht erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, POM/thermoplastisches PUR, POM/MBS, PPE/HIPS, PA/HDPE, PA/PP, PA/PPE.
12. Ungesättigte Polyesterharze. Unter ungesättigten Polyesterharzen sollen die Produkte verstanden werden, die durch Kondensationsreaktionen aus gesättigten und ungesättigten Dicarbonsäuren oder deren Anhydriden und Diolen hergestellt werden können. Als Dicarbonsären hierfür werden Maleinsäure und Fumarsäure genannt. Das am häufigsten verwendete Monomer ist das Styrol, das sich beliebig mit Polyesterharzen mischen läßt.
13. Epoxidharze. Unter Epoxidharzen sollen Verbindungen verstanden werden, die durch Polyadditionsreaktion aus einer Epoxidkomponente und einer Vernetzungskomponente (Härter) hergestellt werden können. Die Epoxidkomponente kann auch durch Zusatz geeigneter Katalysatoren mit sich selbt vernetzen. Als Epoxidkomponenten werden genannt: Aromatische Polyglycidylether wie Bisphenol A-bisglycidylether, Bisphenol F-bisgylcidylether und Bisphenol S-bisglycidylether, Polyglycidylether von Phenol/Formaldehyd- und Kresol/Formaldehyd-Harzen, Diglycidylether von Phthal-, Tetrahydrophthal-, Isophthal- und Terephthalsäure, Triglycidylcyanurat und/oder Hydantoin-Epoxidharze. Die Vernetzung (Härtung) kann mit Polyaminen wie Triethylentetramin, Polyamidoaminen, mehrbasigen Säuren oder deren Anhydriden, etwa Phthalsäureanhydrid oder Hexahydrophthalsäureanhydrid durchgeführt werden, ggf. unter Zusatz von Beschleunigern und/oder Katalysatoren.

Die erfindungsgemäßen polymeren Massen können auch zusätzlich bis zu 80 Gew.-% an Füllstoffen und Verstärkungsmitteln enthalten, wie beispielsweise Calciumcarbonat, Silikate, Glasfasern, Asbest, Talk, Kaolin, Glimmer, Bariumsulfat, Metalloxide und -hydroxide, Ruß, Graphit.

Bevorzugt sind dabei Formmassen, die zusätzlich 10 bis 50 Gew.-% an Füllstoffen und Verstärkungsmitteln enthalten.

Die cyclischen Diphosphorsäureester, wie sie erfindungsgemäß verwendet werden, können durch folgende Verfahrensschritte hergestellt werden:
1. Reaktion eines Diols mit Phosphoroxichlorid zum Tetrachlorid eines Diphosphorsäureesters 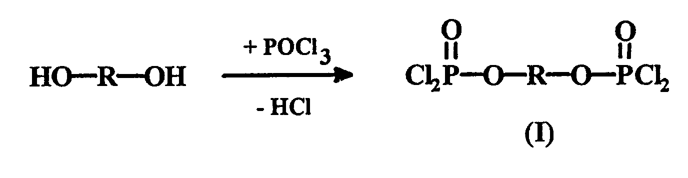
2. Umsetzung des Tetrachlorids (I) bei erhöhter Temperatur mit 2,2-Dimethyl-1,3-propandiol, wobei unter Abspaltung von Chlorwasserstoff der cyclische Diphosphorsäureester (II) gebildet wird:

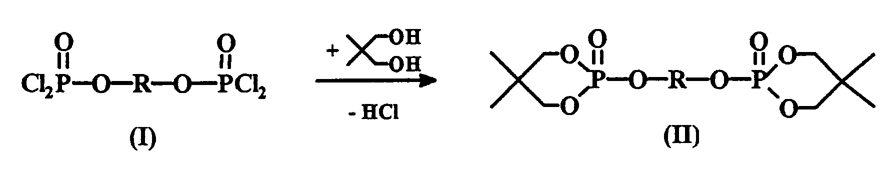

Die Umsetzungen können in geeigneten inerten Lösungsmitteln, wie Aromaten, Aliphaten, Cycloaliphaten oder Chloraliphaten, und in Gegenwart geeigneter tertiärer Amine, wie Triethylamin oder Pyridin, sowie in Gegenwart geeigneter Katalysatoren, wie Aluminiumchlorid, durchgeführt werden.

Das Verfahren zur Herstellung dieser cyclischen Diphosphorsäureester kann unter Normaldruck oder unter vermindertem Druck durchgeführt werden.

Die Prozentangaben in den folgenden Beispielen sind Masse-Prozente.

### Beispiel 1

Zunächst wurde das Tetrachlorid der 1,3-Phenylendiphosphorsäure nach Beispiel 8 der Deutschen Offenlegungsschrift 22 00 137 hergestellt und destillativ gereinigt.

Für den nächsten Reaktionsschritt wurden dann 172 g (1 Mol) dieses Produkts in einem Rührreaktor in 500 ml Xylol gelöst, mit 104 g (1 Mol) 2,2-Dimethyl-1,3-propandiol und 1,5 g Aluminiumchlorid (wasserfrei) versetzt und unter Rühren im Temperaturbereich von 20 - 120 °C im Verlauf von 5 Stunden zur Reaktion gebracht. Nach Abkühlung auf Raumtemperatur wurde der grobkristalline Feststoff filtriert, mit Toluol gewaschen und anschließend aus Ethanol/Wasser umkristallisiert. Es wurden 184 g eines farblosen, kristallinen Produkts mit dem Schmelzpunkt 161 - 163 °C erhalten, dessen Elementaranalyse folgende Werte ergab:
- Kohlenstoff:: 46,6 % (theoretisch für C₁₆H₂₄0₈P₂: 47,3 %)
- Wasserstoff:: 6,0 % (theoretisch für C₁₆H₂₄0₈P₂: 6,0 %)
- Phosphor:: 15,2 % (theoretisch tur C₁₆H₂₄0₈P₂: 15,2 %)

Die obigen Analysenwerte sowie die ¹H-NMR- und die ³¹P-NMR-Analyse ergaben, daß es sich um das Produkt 1,3-Bis[2-oxo-5,5-dimethyl-1,3,2-dioxaphosphorinanyl-2-oxy]benzol handelt.

Den Versuchen zur Herstellung von flammwidrigen Polyester-Polyurethan-Weichschäumen lag folgende Rezeptur zugrunde (Gew.-Teile):
- 100 Teile: Polyol
®Desmophen 2200, ein Polyesterpolyol der BAYER AG, Leverkusen, mit einer Hydroxylzahl von 60 mg KOH/g, einer Dichte von 1,18 g/ml und einer Viskosität von 17500 mPa · s bei 25 °C
- variable Teile: Flammschutzmittel
- 3,5 Teile: Wasser
- 1,5 Teile: Katalysator
®Desmorapid DB, ein tertiäres Amin der BAYER AG, Leverkusen, als leicht gelbliche, klare Flüssigkeit mit einer Dichte von ca. 0,9 g/ml bei 25 °C und einem Siedepunkt von 179-182 °C
- 1,0 Teile: Siliconstabilisator
®Niax SE-232, ein Siliconstabilisator der Fa. OSi Specialities S.A., Meyrin (Schweiz), mit einer Dichte von 1,01 g/ml bei 25 °C und einer Viskosität von 330 mPa·s bei 25 °C.
- 45,5 Teile: Diisocyanato-toluol
®Desmorapid T80, ein 80/20-Gemisch der 2,4- und 2,6-Diisocyanatotoluole der BAYER AG, Leverkusen mit einer Dichte von 1,221 g/ml bei 20 °C und einem Schmelzpunkt von 13,6 °C.

Bei den nachfolgenden Beispielen wurden folgende Flammschutzmittel eingesetzt:
- Produkt aus Beispiel 1
- ®Hostaflam AP 422, ein langkettiges Ammoniumpolyphosphat der HOECHST AG, Frankfurt, mit einer Dichte von 1,9 g/ml, einem Phosphorgehalt von 31,5 % und einem Stickstoffgehalt von 14,5 %.

Zur Beurteilung der Flammwidrigkeit wurden Brandtests gemäß ASTM-D2863 (Sauerstoff-Index), (J. Troitzsch, ibidem, S. 217-218), gemäß UL 94-Horizontaltest für Weichschaum (J. Troitzsch, ibidem, S. 348-349) und gemäß DIN 4102, Teil 1, durchgeführt.

Wie die Vergleichsbeispiele mit Ammoniumpolyphosphat, dem Standard-Flammschutzmittel für halogenfreie flammwidrige Polyester-PUR-Weichschäume, in Tabelle 1, Beispiele 5-7, zeigen, ist trotz eines Phosphorgehaltes des Schaums von 2,06 bis 3,87 % keine Einstufung in die Klasse DIN 4102-B2 möglich.

Dagegen wird bei den Versuchen mit einem erfindungsgemäßen cyclischen Diphosphorsäureester bereits bei Phosphorgehalten > 1,44 % eine DIN 4102-B2-Einstufung erreicht.

Noch deutlicher wird der Unterschied in der Flammschutzeffektivität beim UL 94-Horizontaltest (siehe Tabelle 2). Hier wird bereits mit 0,99 % P im PUR-Weichschaum ein UL 94-HF1, die beste Klasse im UL 94-Horizontaltest, erreicht, während für die gleiche Einstufung beim Ammoniumpolyphosphat Phosphorgehalte von 2,99 % erforderlich sind.

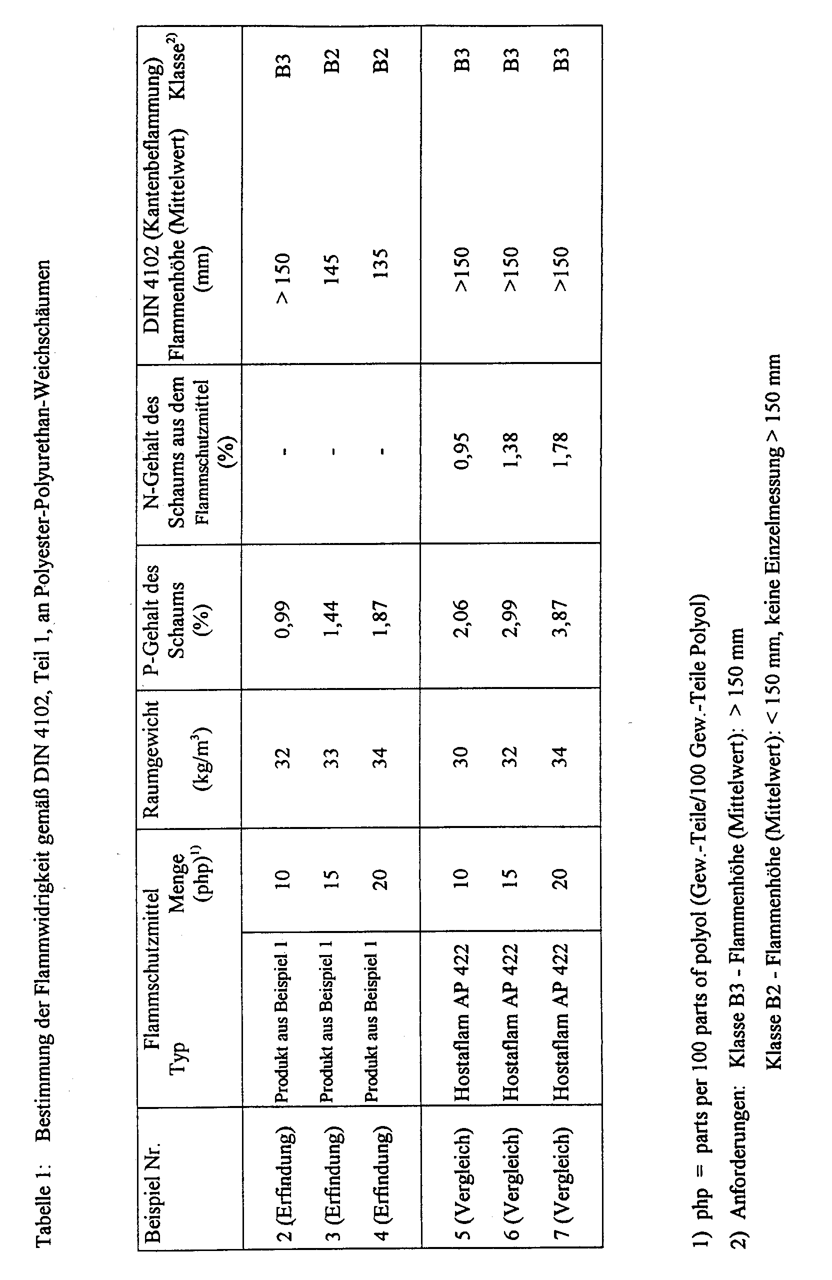

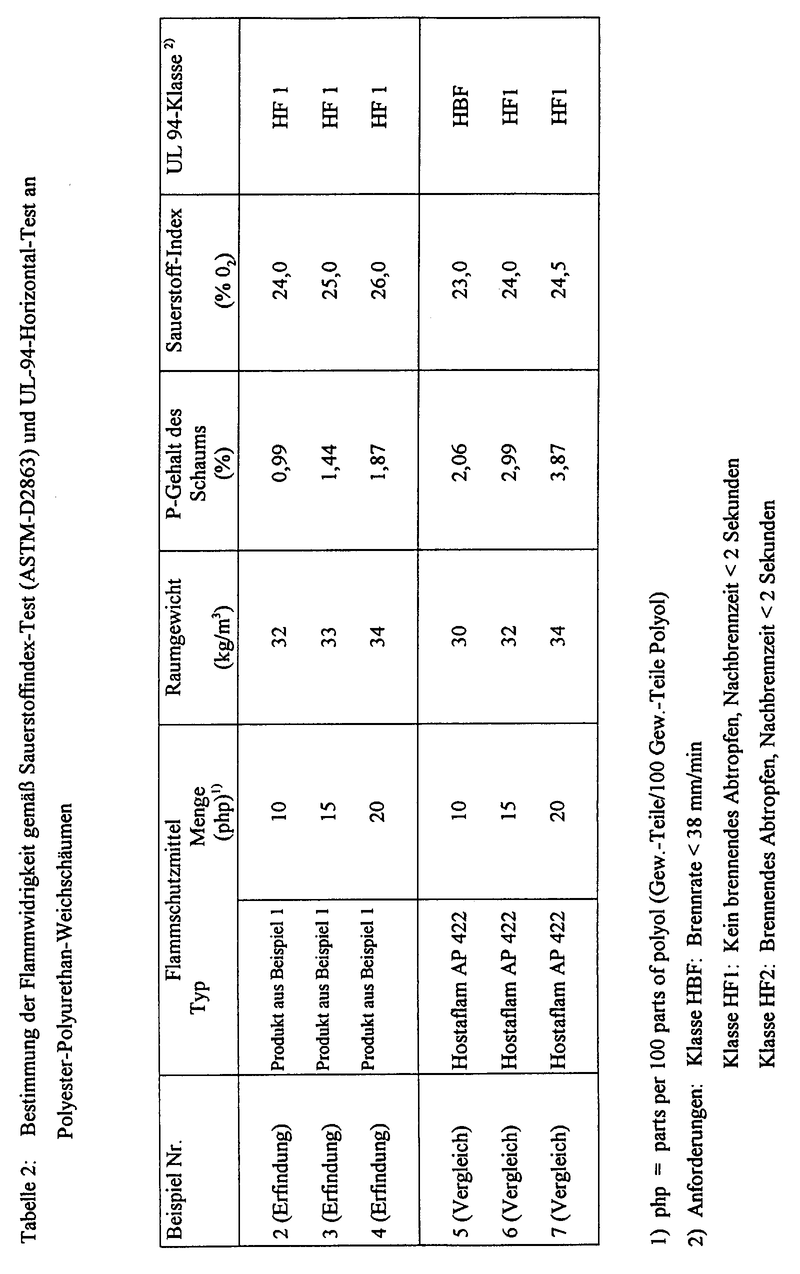

## Patentansprüche

1. Flammwidrige polymere Massen, dadurch gekennzeichnet, daß sie einen cyclischen Diphosphorsäureester der allgemeinen Formel 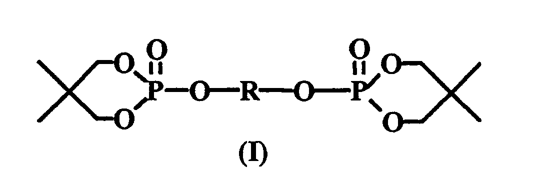 mit R = Methylethylen, 1,3-Cyclohexylen, 1,4-Cyclohexylen oder 1,3-Phenylen
als Flammschutzmittel enthalten.

2. Flammwidrige polymere Massen nach Anspruch 1, dadurch gekennzeichnet, daß sie den cyclischen Diphosphorsäureester in Kombination mit anderen Flammschutzmitteln enthalten.

3. Flammwidrige polymere Massen nach Anspruch 2, dadurch gekennzeichnet, daß die anderen Flammschutzmittel halogenfrei sind.

4. Flammwidrige polymere Massen nach mindestens einem der Ansprüche 1 bis 4, dadurch gekennzeichnet, daß sie 98 bis 60 Gew.-% eines Polymeren oder einer Polymermischung und 2 bis 40 Gew.-% des cyclischen Diphosphorsäureesters der allgemeinen Formel (I) enthalten.

5. Flammwidrige polymere Massen nach mindestens einem der Ansprüche 1 bis 4, dadurch gekennzeichnet, daß es sich dabei um Polyurethan-Systeme handelt.

6. Polyurethan-System, enthaltend 2 bis 40 Gew.-% des cyclischen Diphosphorsäureesters der allgemeinen Formel (I).
